# EUROPEAN PATENT APPLICATION

(11) **EP 4 841 589 A1**
(43) Date of publication of application: **18.11.2026**
(21) Application number: 25176350.4
(22) Date of filing: 14.05.2025
(51) Int. Cl.: G06V 20/58

(54) **MONITORING THE ENVIRONMENT OF A VEHICLE OR ROBOT WITH FASTER UPDATES IN CASE OF MOTION**

(71) Applicant: Robert Bosch GmbH, 70442 Stuttgart (DE)
(72) Inventor: Roesler, Simon, 31134 Hildesheim (DE); Erahan, Eashwara Sudharsan, 31137 Hildesheim (DE); Gigengack, Fabian, 30966 Hemmingen (DE)

(57) **Abstract**

A method (100) for monitoring the environment of a vehicle and/or robot (1), comprising the steps of:
• obtaining (110) measurement data (2) of at least one modality that relates to a scene (1a) in which the vehicle and/or robot (1) participates;
• computing (120), from the measurement data (2), a representation (3) of the scene (1a) in three-dimensional space, said representation (3) comprising a superposition of functions that make location-dependent contributions (3a-3l) to the representation (3);
• computing (130), from the representation (3) in three-dimensional space, a two-dimensional view (4) of the scene (1a) from a chosen perspective (5); and
• providing (140) this two-dimensional view (4) to a given task module (6) that evaluates, based at least in part on the two-dimensional view (4), an assessment (7a) of the scene (1a), and/or an action (7b) to be taken by the vehicle and/or robot (1).

## Description

The present invention relates to the monitoring of the environment of a vehicle or robot, in particular for the purpose of automatically steering this vehicle or robot.

### Background

When a vehicle or robot is to be steered automatically across company premises or even in public road traffic, it has to react to obstacles, other traffic participants and other traffic-relevant objects. Therefore, the environment of the vehicle or robot needs to be monitored constantly. Typically, images from several cameras are used, optionally also in combination with measurement data of different types, such as radar and lidar data. Measurement data from all sources is transformed into a common representation that shows the scene in which the robot or vehicle participates from a bird's-eye view.

This bird's-eye view representation usually represents the space around the vehicle or robot as a regular discretized grid. The memory requirement for the representation depends on how fine this grid is. The representation is re-computed upon an update to the measurement data of any one modality.

### Disclosure of the invention

The invention provides a method for monitoring the environment of a vehicle and/or robot.

In the course of this method, measurement data of at least one modality is obtained. This measurement data relates to a scene in which the vehicle and/or robot participates.

For example, the measurement data may comprise still or moving images from one or more cameras. An image usually assigns, to each pixel in a two-dimensional or three-dimensional regular grid, a value, such as an intensity value and/or color value. But one or more modalities may also yield point clouds as measurement data. A point cloud assigns, to arbitrary points in space, values of one or more quantities, such as measurement values. For example, radar and lidar measurements output measurement data as point clouds.

From the measurement data, a representation of the scene in three-dimensional space is computed. This representation comprises a superposition of functions that make location-dependent contributions to the representation.

From this representation in three-dimensional space, a two-dimensional view of the scene from a chosen perspective is computed.

This two-dimensional view is provided to a given task module. This task module evaluates, based at least in part on the two-dimensional view, an assessment of the scene, and/or an action to be taken by the vehicle and/or robot.

In particular, the task module may be a trained machine learning model. In particular, a trained machine learning model may be any model that has a parametrized function with adjustable parameters and a great power to generalize. In particular, training of such a machine learning model may comprise optimizing the parameters such that, when the model is given training examples, the output of the model corresponds to ground truth "labels" assigned to the respective training examples ("supervised training"). In particular, the machine learning model may be and/or may comprise a neural network, and/or a support vector machine.

Compared with the previous direct computation of a bird's-eye view, the computation of first a representation in three-dimensional space and then the two-dimensional view appears to be more work. This is indeed true if the computation is performed only once. But if the scene is changing and an update is needed, this update will typically only affect part of the measurement data, e.g., only measurement data from some of the cameras or other sensors. For example, the change in the scene may be in the field of view of only one or a few cameras or other sensors. This means that only part of the location-dependent contributions will need to be updated, requiring only a fraction of the amount of work that was needed for the first computation of the representation in three-dimensional space. The rendering of the two-dimensional view from the representation in three-dimensional space is a very fast process. That is, of the slower process of converting measurement data into the representation in three-dimensional space, only part is repeated, whereas the fast process of rendering the two-dimensional view (such as a bird's-eye view) is repeated in full.

By contrast, if the conventional direct computation of the bird's-eye view from measurement data is to be updated, the fast process of converting measurement data of each measurement modality to a respective bird's-eye view is repeated only in part for the measurement data that is actually being updated. But the expensive process of combining all these individual bird's-eye views into one single bird's-eye view needs to be repeated in full because all the individual contributions interact with each other. The end result is that, when new measurement data arrives, a direct update of the bird's-eye view costs much more time than first updating the representation in three-dimensional space and then re-rendering the bird's-eye view from this updated representation.

Moreover, the representation in three-dimensional space is a sparse representation. Location-dependent contributions only need to be stored for locations where something is actually present; for empty space, nothing needs to be stored. This is in contrast to the dense representation of the bird's-eye view that, depending on how fine the regular discretized grid is chosen to be. The sparse representation may be used directly by suitable task modules. At the same time, the computing of the two-dimensional view, such as bird's-eye view, ensures compatibility with existing task modules for "dense" tasks that require this bird's-eye view as input.

A further advantage is that we perform updates(re-computation) in 3D, which can capture more information and flexibly project it to the view of our liking, such as bird's-eye view, BEV, upon which existing task modules operate efficiently.

As discussed above, in a particularly advantageous embodiment, the method further comprises:
- obtaining updated measurement data;
- updating, based on the updated measurement data, the representation of the scene; and
- re-computing, based on the updated representation, the two-dimensional view of the scene.

In this manner, the initial computation of the two-dimensional view of the scene may cost more time than the direct computation of this view from measurement data, but the subsequent updates will cost a lot less time.

In a further particularly advantageous embodiment, at least one distribution function that assigns, to each location in three-dimensional space, a probability is chosen as a function that makes location-dependent contributions to the representation. These contributions are well motivated and easily interpretable. That is, a representation in three-dimensional space that is assembled from such contributions has a meaning of its own that may, for example, be evaluated further by a downstream task module, and in particular by a task module that directly gets the sparse representation in three-dimensional space as input.

For example, at least one probability density function of a Gaussian distribution may be chosen as a distribution function. Parameter that characterize such a function may, inter alia, comprise one or more of:
- three parameters for spatial translation in the three coordinate directions of Cartesian space;
- thee parameters for scaling in these three coordinate directions;
- four parameters for orientation of the functions in space;
- three parameters for colors with which the contribution of the function affects a view rendered from the representation, in the three additive contributions red, green and blue; and
- optionally additionally velocity vectors for a translation and/or rotation.

All these parameters reside in the arguments of sine, cosine and exponential functions. This means that the Gaussian function is differentiable with respect to them.

As discussed before, a bird's-eye view may be chosen as the perspective for the two-dimensional view. This ensures compatibility with existing task modules that require a bird's-eye view as input.

In a further particularly advantageous embodiment, the assessment of the scene, and/or the action, evaluated by the task module is chosen to depend on the complete two-dimensional view. That is, the task performed by the task module may be a "dense" task. Such dense tasks may then benefit from the faster updates. In particular, the earlier the task module gets an updated input, the earlier it can deliver its output, and the earlier the vehicle and/or robot may perform an action that is appropriate given this output.

In particular, the assessment of the scene evaluated by the task module may comprise occupancy of areas in space. Such occupancy is very important for planning the future behavior of the vehicle and/or robot, such as into which areas the vehicle and/or robot may move into the near future.

As discussed before, in a further particularly advantageous embodiment, the representation in three-dimensional space is provided to a further task module that evaluates, based at least in part on the representation, an assessment of the scene, and/or an action to be taken by the vehicle and/or robot. That is, such a task module may work on "sparse" tasks for which the sparse representation in three-dimensional space is sufficient. This allows for a quicker delivery of the task output for two reasons: First, the representation in three-dimensional space can be directly used; there is no need to wait for a two-dimensional view to be rendered. Second, the task module needs to process a lesser amount of information than is contained in a dense two-dimensional bird's-eye view.

In particular, in a further advantageous embodiment, the assessment of the scene, and/or the action, evaluated by the further task module is chosen to depend on only selected portions of three dimensional space. This further decreases the amount of information that needs to be processed by this further, sparse task module, thereby allowing for a further speed-up.

For example, the assessment of the scene evaluated by the further task module may be chosen to comprise the presence, the position, and/or the type, of one or more object instances in the scene. This object detection only requires measurement data that relates to the particular object instance at a time.

In a further particularly advantageous embodiment, based on the assessment of the scene, and/or the action to be taken by the vehicle and/or robot, an actuation signal is computed. The vehicle and/or robot is actuated with the actuation signal. Because the output is obtained quicker than previously, in particular after an update of the measurement data, the vehicle and/or robot may react quicker to changes in the scene in which it participates. In particular, this is advantageous to avoid collisions with obstacles, or other traffic participants that make unexpected movements.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

### Description of the Figures

In the following, the invention is illustrated using Figures without any intention to limit the scope of the invention. The Figures show:
Figure 1 Exemplary embodiment of the method 100 for monitoring the environment of a vehicle and/or robot 1;
Figure 2 Illustration of an exemplary processing chain in the course of the method 100;
Figure 3 Schematic illustration of the rendering of a representation 3 in three-dimensional space into a two-dimensional view 4.

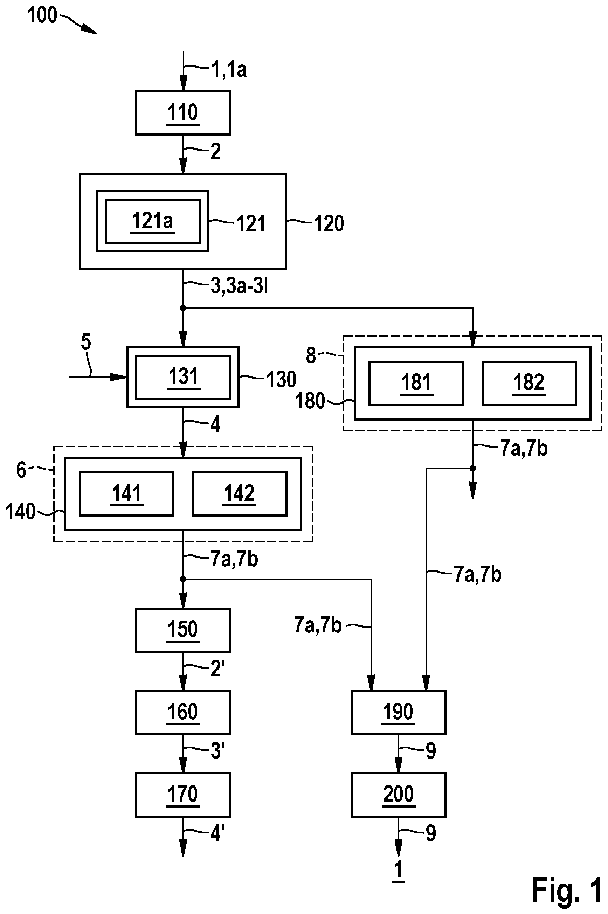

Figure 1 is a schematic flow chart of an exemplary embodiment of the method 100 for monitoring the environment of a vehicle and/or robot 1.

In step 110, measurement data 2 of at least one modality is obtained. This measurement data 2 relates to a scene 1a in which the vehicle and/or robot 1 participates.

In step 120, a representation 3 of the scene 1a in three-dimensional space is computed from the measurement data 2. This representation 3 comprises a superposition of functions that make location-dependent contributions 3a-3l to the representation 3.

According to block 121, at least one distribution function that assigns, to each location in three-dimensional space, a probability may be chosen as a function that makes location-dependent contributions 3a-3l to the representation 3.

In particular, according to block 121a, at least one probability density function of a Gaussian distribution may be chosen as a distribution function.

In step 130, from the representation 3 in three-dimensional space, a two-dimensional view 4 of the scene 1a from a chosen perspective 5 is computed.

According to block 131, a bird's-eye view may be chosen as the perspective 5 for the two-dimensional view 4.

In step 140, the two-dimensional view 4 is provided to a given task module 6. This task module 6 evaluates, based at least in part on the two-dimensional view 4, an assessment 7a of the scene 1a, and/or an action 7b to be taken by the vehicle and/or robot 1. The task module 4 operates on the dense two-dimensional view 4 and is therefore also called "dense task module".

According to block 141, the assessment 7a of the scene 1a, and/or the action 7b, evaluated by the task module 6 may be chosen to depend on the complete two-dimensional view 4.

According to block 142, the assessment 7a of the scene 1a evaluated by the task module 6 may comprise occupancy of areas in space.

In the example shown in Figure 1, in step 150, updated measurement data 2' is obtained. In step 160, based on the updated measurement data 2', the representation 3 of the scene 1a is updated. The result is an updated representation 3'. In step 170, based on the updated representation 3', the two-dimensional view 4 of the scene 1a is re-computed. The result is an updated two-dimensional view 4'.

Optionally, in step 180, the representation 3 in three-dimensional space may be provided to a further task module 8 that evaluates, based at least in part on the representation 3, an assessment 7a of the scene 1a, and/or an action 7b to be taken by the vehicle and/or robot 1. This further task module 8 operates on the sparse representation 3 of the scene 1a and is therefore also called "sparse task module".

According to block 181, the assessment 7a of the scene 1a, and/or the action 7b, evaluated by the further task module 8 may be chosen to depend on only selected portions of three dimensional space.

According to block 182, the assessment 7a of the scene 1a evaluated by the further task module 8 may be chosen to comprise the presence, the position, and/or the type, of one or more object instances in the scene 1a.

In the example shown in Figure 1, in step 190, based on the assessment 7a of the scene 1a, and/or the action 7b to be taken by the vehicle and/or robot 1, that has been computed by the task module 6 and/or by the further task module 8, an actuation signal 9 is computed. In step 200, the vehicle and/or robot is actuated with this actuation signal. The actuation signal 9 may, for example, cause the vehicle and/or robot 1 to follow a certain trajectory. But the actuation signal 9 may also, for example, directly act upon a drive system, a steering system, and/or a braking system of the vehicle and/or robot 1.

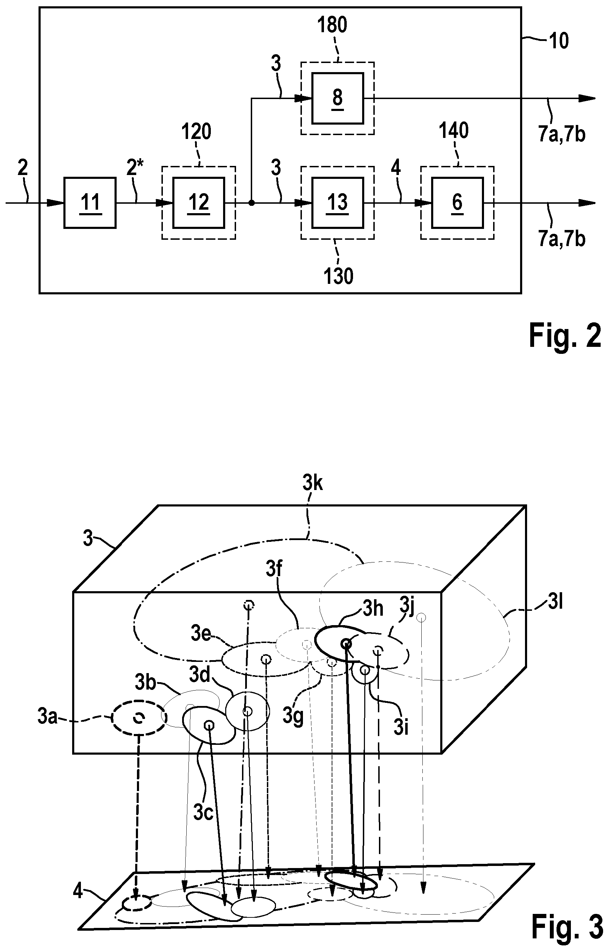

Figure 2 illustrates how measurement data 2 may be processed into an assessment 7a of the scene 1a, and/or into an action 7b to be taken by the vehicle and/or robot 1.

In the example shown in Figure 2, the measurement data 2 is converted into features 2* by the feature encoder 11. A Gaussian encoder 12 produces a representation 3 of the scene 1a in three-dimensional space based on Gaussian probability density functions that provide location-dependent contributions 3a-3l to the representation 3, according to step 120 of the method 100.

This representation 3 may be used in two manners. First, it may be provided to the Gaussian Bird's-Eye View Splatter 13 that renders a two-dimensional view 4 of the scene 1a, here: a bird's-eye view, from the representation 3 according to step 130 of the method 100. The bird's-eye view 4 may then be provided to the task module 6 that outputs, based on this dense bird's-eye view 4, according to step 140 of the method 100, an assessment 7a of the scene 1a, and/or an action 7b to be taken by the vehicle and/or robot 1. Second, the representation 3 may be fed to a further task module 8 that directly operates on this sparse representation 3 and outputs, according to step 180 of the method 100, an assessment 7a of the scene 1a, and/or an action 7b to be taken by the vehicle and/or robot 1.

The feature encoder 11, the Gaussian encoder 12, the Gaussian Bird's-Eye View Splatter 13, the dense task module 6 and the sparse task module 8 together form the 3D processing network 10.

Figure 3 illustrates schematically how a representation 3 in three-dimensional space may be rendered into a two-dimensional view 4 of the scene 1a. The representation 3 comprises contributions 3a-3l. Each contribution has a center (symbolized by a dot) and an accompanied extent (covariance, symbolized by an ellipsoid). When the representation 3 is rendered, they are, in a broadest sense, projected onto a two-dimensional surface. These projections may lie on top of each other, and depending on their respective opacities, only the top contribution may be visible, or a mixture of the components that are stacked on top of each other may be visible.

This rendering needs to be repeated whenever one of the contributions 3a-3l changes. But it is a straight-forward and very fast process. Therefore, as discussed above, updating one or a few contributions 3a-3l to the representation 3, and then re-rendering the two-dimensional view 4, is still a lot faster than directly re-computing this two-dimensional view 4 from the updated measurement data 2'.

## Claims

1. A method (100) for monitoring the environment of a vehicle and/or robot (1), comprising the steps of:
• obtaining (110) measurement data (2) of at least one modality that relates to a scene (1a) in which the vehicle and/or robot (1) participates;
• computing (120), from the measurement data (2), a representation (3) of the scene (1a) in three-dimensional space, said representation (3) comprising a superposition of functions that make location-dependent contributions (3a-3l) to the representation (3);
• computing (130), from the representation (3) in three-dimensional space, a two-dimensional view (4) of the scene (1a) from a chosen perspective (5); and
• providing (140) this two-dimensional view (4) to a given task module (6) that evaluates, based at least in part on the two-dimensional view (4), an assessment (7a) of the scene (1a), and/or an action (7b) to be taken by the vehicle and/or robot (1).

2. The method (100) of claim 1, further comprising:
• obtaining (150) updated measurement data (2');
• updating (160), based on the updated measurement data (2'), the representation (3) of the scene (1a); and
• re-computing (170), based on the updated representation (3'), the two-dimensional view (4) of the scene (1a).

3. The method (100) of any one of claims 1 to 2, wherein at least one distribution function that assigns, to each location in three-dimensional space, a probability is chosen (121) as a function that makes location-dependent contributions (3a-3l) to the representation (3).

4. The method (100) of claim 3, wherein at least one probability density function of a Gaussian distribution is chosen (121a) as a distribution function.

5. The method (100) of any one of claims 1 to 4, wherein a bird's-eye view is chosen (131) as the perspective (5) for the two-dimensional view (4).

6. The method (100) of any one of claims 1 to 5, wherein the assessment (7a) of the scene (1a), and/or the action (7b), evaluated by the task module (6) is chosen (141) to depend on the complete two-dimensional view (4).

7. The method (100) of any one of claims 1 to 6, wherein the assessment (7a) of the scene (1a) evaluated by the task module (6) comprises (142) occupancy of areas in space.

8. The method (100) of any one of claims 1 to 7, further comprising: providing (180) the representation (3) in three-dimensional space to a further task module (8) that evaluates, based at least in part on the representation (3), an assessment (7a) of the scene (1a), and/or an action (7b) to be taken by the vehicle and/or robot (1).

9. The method (100) of claim 8, wherein the assessment (7a) of the scene (1a), and/or the action (7b), evaluated by the further task module (8) is chosen (181) to depend on only selected portions of three dimensional space.

10. The method (100) of any one of claims 8 to 9, wherein the assessment (7a) of the scene (1a) evaluated by the further task module (8) is chosen (182) to comprise the presence, the position, and/or the type, of one or more object instances in the scene (1a).

11. The method (100) of any one of claims 1 to 10, further comprising:
• computing (190), based on the assessment (7a) of the scene (1a), and/or the action (7b) to be taken by the vehicle and/or robot (1), an actuation signal (9), and
• actuating (200) the vehicle and/or robot (1) with the actuation signal (9).

12. A computer program, comprising machine-readable instructions that, when executed by one or more computers and/or compute instances, cause the one or more computers and/or compute instances to perform the method (100) of any one of claims 1 to 11.

13. A non-transitory machine-readable data carrier and/or a download product with the computer program of claim 12.

14. One or more computers and/or compute instances with the computer program of claim 12, and/or with the machine-readable data carrier and/or download product of claim 13.
